(19) Europäisches Patentamt

European Patent Office

Office européen des brevets

(11) **EP 2 695 017 B1**

(12) **FASCICULE DE BREVET EUROPÉEN**

(45) Date de publication et mention
de la délivrance du brevet:
**24.10.2018 Bulletin 2018/43**

(21) Numéro de dépôt: **12709128.8**

(22) Date de dépôt: **19.03.2012**

(51) Int Cl.:
***G02B 27/01*** *(2006.01)*

(86) Numéro de dépôt international:
**PCT/EP2012/054832**

(87) Numéro de publication internationale:
**WO 2012/136470 (11.10.2012 Gazette 2012/41)**

(54) **DISPOSITIF DE GUIDAGE OPTIQUE ET PROCÉDÉ DE FABRICATION D'UN TEL DISPOSITIF**

VORRICHTUNG ZUR OPTISCHEN WELLENLEITUNG UND VERFAHREN ZUR HERSTELLUNG
EINER SOLCHEN VORRICHTUNG

OPTICAL LIGHT GUIDING DEVICE AND METHOD OF MANUFACTURING THE DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **05.04.2011 FR 1152914**

(43) Date de publication de la demande:
**12.02.2014 Bulletin 2014/07**

(73) Titulaire: **Optinvent**
**35700 Rennes (FR)**

(72) Inventeurs:
• **DUBROCA, Guilhem**
**F-35700 Rennes (FR)**
• **BENOIT, Pascal**
**F-35700 Rennes (FR)**
• **HUGEL, Xavier**
**F-35700 Rennes (FR)**

(74) Mandataire: **Cabinet Le Guen Maillet**
**3, impasse de la Vigie**
**CS 71840**
**35418 Saint-Malo Cedex (FR)**

(56) Documents cités:
**FR-A1- 2 925 172    US-A- 5 341 230
US-A- 6 092 904    US-A1- 2003 165 017**

**Description**

La présente invention concerne le domaine des guides optiques, ou dispositifs de guidage optique, et plus particulièrement des guides permettant le transport sans déformation d'une image. Ces guides peuvent notamment être utilisés pour la confection de systèmes optiques de vision oculaire, plus communément appelés lunettes informatives.

Un guide optique comporte généralement une section d'injection, par laquelle le faisceau lumineux transportant une image est introduit. Le faisceau lumineux transportant l'image est issu d'une source pouvant être une matrice de pixels de type LCD (*Liquid Cristal Display* en anglais) éclairés par une source de lumière ou de type OLED (*Organic Light-Emitting Diode* en anglais). Le faisceau lumineux traverse ensuite un système optique permettant d'obtenir un faisceau collimaté, c'est-à-dire dont les rayons sont substantiellement parallèles. On dit aussi que l'image est ainsi portée à l'infini. Le faisceau collimaté est alors introduit dans la section d'injection du guide optique.

Le guide optique permet au faisceau lumineux de se propager par réflexion totale interne, éventuellement grâce à un traitement spécifique des parois du guide optique. Le faisceau lumineux se propage ainsi jusqu'à une section d'extraction permettant sa sortie du guide optique. La section d'extraction peut être constituée d'un réflecteur terminant le guide optique par un plan incliné.

Le brevet FR 2 925 172 B1 décrit un guide optique doté d'une section d'extraction constituée de microstructures réfléchissantes formées en surface du guide optique. Ces microstructures sont constituées des prismes ayant un angle permettant la sortie du faisceau lumineux du guide optique. Les microstructures sont espacées par des espaces interstitiels formés dans le prolongement de la surface du guide optique. Ces espaces interstitiels, c'est-à-dire non couverts de microstructures et prenant place entre celles-ci, sont transparents et permettent ainsi d'obtenir l'effet de vision à travers (*see-through* en anglais). Cela permet de voir l'image transportée par le faisceau lumineux, ainsi que les scènes au-delà du guide optique. Ces espaces interstitiels génèrent cependant un phénomène équivalent à une diffraction par une fente, ce qui induit des interférences sur la vision des scènes environnantes à travers le guide optique.

Il est connu le document US 2003/165017 A1 qui décrit un guide optique comportant un ensemble de structures d'extraction formant des faces parallèles entre elles, qui sont non parallèles aux faces du guide optique.

Il est souhaitable de pallier ces différents inconvénients de l'état de la technique.

Il est notamment souhaitable de fournir une solution qui permette à un utilisateur du guide optique de voir une image, injectée dans le guide, de manière superposée à la scène se déroulant au delà du guide, et ce en limitant les interférences perçues tant sur l'image injectée que sur la vision à travers le guide optique.

Il est notamment souhaitable de fournir une solution qui permette de pallier le phénomène équivalent à une diffraction par une fente inhérent aux solutions de l'état de la technique.

Il est notamment souhaitable de fournir une solution qui soit de fabrication simple, fiable et à faible coût.

L'invention concerne un dispositif de guidage optique d'un faisceau lumineux transportant une image tel que spécifié dans la revendication une. Ledit dispositif de guidage optique comprenant une première partie, dans un matériau transparent, adaptée pour propager le faisceau lumineux par réflexions successives. Ladite première partie est telle qu'elle comprend une section d'extraction comportant au moins une microstructure, située en surface de ladite première partie et comportant une surface plane adaptée pour permettre la sortie du dispositif de guidage de rayons (3.5) du faisceau lumineux venant frapper ladite surface plane. Ledit dispositif de guidage optique est tel qu'il comprend en outre : une seconde partie, dans un matériau substantiellement identique à celui de ladite première partie, comprenant une section, dite section complémentaire, comportant en surface au moins une microstructure de forme complémentaire à celle(s) de ladite section d'extraction ; et une couche de colle s'étendant sur une partie des surfaces desdites première et seconde parties les assemblant de telle sorte que toute microstructure de ladite section d'extraction est séparée de sa microstructure complémentaire par un milieu transparent d'épaisseur substantiellement constante.

Ainsi, par mise en oeuvre de cette seconde partie dotée de microstructures de forme complémentaire à celles de ladite section d'extraction, et par respect d'une séparation entre chaque microstructure et sa complémentaire par un milieu transparent d'épaisseur substantiellement constante, le phénomène de diffraction de l'état de la technique pour la vision à travers est limité. L'adoption d'une forme complémentaire pour la seconde partie permet aussi de limiter les artefacts et images parasites. On forme en effet des lames à faces parallèles, ce qui assure que les rayons traversant la séparation entre les deux parties ne sont pas déviés. On assure ainsi une bonne qualité d'image tant pour l'image issue de l'effet de vision à travers que pour l'image transportée par le faisceau lumineux. De plus, un tel dispositif de guidage optique peut être fabriqué de manière fiable, simple et peu coûteuse. En effet, les première et seconde parties peuvent être obtenues par moulage, dans des moules séparés, et assemblées ensuite par collage.

Selon un mode de réalisation particulier, ladite couche de colle s'étend sur une partie de la surface de ladite première partie autre que celle adaptée pour propager le faisceau lumineux par réflexions successives.

Ainsi, il y a absence de colle entre les première et seconde parties dans la zone où le faisceau lumineux se propage depuis la section d'injection précédemment évoquée et la section d'extraction. De cette manière, l'adjonction de la colle n'entraîne pas, du point de vue de la propagation du faisceau lumineux, une augmentation de l'épaisseur du dispositif de guidage optique, ce qui aurait pour effet de créer des trous de lumière lors de la réflexion du faisceau lumineux.

Selon un mode de réalisation particulier, la couche de colle s'étend sur une surface de ladite première partie autre que celle comportant la section d'extraction.

Selon un mode de réalisation particulier, ladite colle est à microbilles.

Ainsi, les microbilles intercalées entre les surfaces des première et seconde parties permettent de faciliter que soit assurée l'épaisseur substantiellement constante du milieu transparent entre chaque microstructure et sa complémentaire.

Selon un mode de réalisation particulier, la couche de colle constitue ledit milieu transparent entre chaque microstructure de ladite section d'extraction et sa microstructure complémentaire.

Selon un mode de réalisation particulier, chaque microstructure de ladite section d'extraction est composée d'un prisme formant saillie en surface de ladite première partie. Selon un autre mode de réalisation particulier, chaque microstructure de ladite section d'extraction est composée d'un prisme en forme de creux en surface de ladite première partie.

Selon un mode de réalisation particulier, ledit dispositif de guidage optique comporte une couche en matériau partiellement réfléchissant s'étendant sur chaque microstructure de ladite section d'extraction.

Ainsi, selon les caractéristiques du dispositif de guidage, il est possible d'appliquer une couche homogène de matériau partiellement réfléchissant sur les microstructures de la section d'extraction. Un même traitement étant appliqué sur l'ensemble de la section d'extraction, cela simplifie et réduit le coût de fabrication du dispositif de guidage en comparaison avec l'état de la technique. La scène extérieure, obtenue par effet de vision à travers, se voit ainsi appliquer une atténuation uniforme, alors qu'un dépôt n'occupant que des parties discontinues de la zone d'extraction peut en modifier la perception.

L'invention concerne également un système optique de vision oculaire, caractérisé en ce qu'il comprend un dispositif de guidage optique selon l'un quelconque des modes de réalisation précédents.

L'invention concerne également un procédé de fabrication d'un dispositif de guidage optique selon l'un quelconque des modes de réalisation précédents, le procédé étant tel qu'il comporte les étapes suivantes : une étape d'obtention d'au moins une première microstructure à la surface d'une première partie dudit dispositif de guidage ; une étape d'obtention d'au moins une seconde microstructure, de forme complémentaire à la ou aux première(s) microstructure(s), à la surface d'une seconde partie dudit dispositif de guidage ; une étape de dépose d'une couche de matériau partiellement réfléchissant sur la ou les microstructures de ladite première partie ; une étape de collage des première et seconde parties entre elles, de telle sorte que toute microstructure de ladite section d'extraction est séparée de sa microstructure complémentaire par un milieu transparent d'épaisseur substantiellement constante.

Ainsi, la fabrication du dispositif de guidage est simplifiée, le résultat en est fiable et les coûts sont réduits par rapport à l'état de la technique. Les première et seconde parties peuvent ainsi être obtenues lors d'opérations de moulage séparées, possiblement réalisées en parallèle.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un dispositif de guidage optique, selon un mode de réalisation de la présente invention ;
- la Fig. 2 illustre schématiquement une section d'injection du dispositif de guidage optique de la Fig. 1 ;
- la Fig. 3 illustre schématiquement une portion d'une première partie du dispositif de guidage optique de la Fig. 1 ;
- la Fig. 4 illustre schématiquement une portion d'une seconde partie du dispositif de guidage optique de la Fig. 1 ;
- la Fig. 5 illustre schématiquement un premier mode de réalisation particulier d'un assemblage des première et seconde parties du dispositif de guidage optique de la Fig. 1 ;
- la Fig. 6 illustre schématiquement un second mode de réalisation particulier d'un assemblage des première et seconde parties du dispositif de guidage optique de la Fig. 1 ;
- la Fig. 7 illustre schématiquement les étapes d'un procédé de fabrication du dispositif de guidage optique de la Fig. 1 ;
- la Fig. 8 illustre schématiquement les effets d'une microstructure de la première partie sur des rayons issus d'une scène extérieure, lorsque la première partie est remplie d'un matériau de remplissage et lorsque la seconde partie n'est pas présente ;
- la Fig. 9 illustre schématiquement les effets d'une microstructure de la première partie sur des rayons issus d'une image injectée via la section d'injection, lorsque la première partie est remplie d'un matériau de remplissage et lorsque la seconde partie n'est pas présente.

La présente invention consiste en un dispositif de guidage optique, ou guide optique, permettant le transport sans déformation d'une image. L'invention va être décrite en référence à un mode particulier de réalisation destiné à être utilisé dans un système optique de vision oculaire. L'invention peut toutefois être utilisée dans tout autre domaine utilisant de tels guides optiques, tels que des écrans intégrés dans un pare-brise d'automobile ou encore dans le cockpit d'un avion.

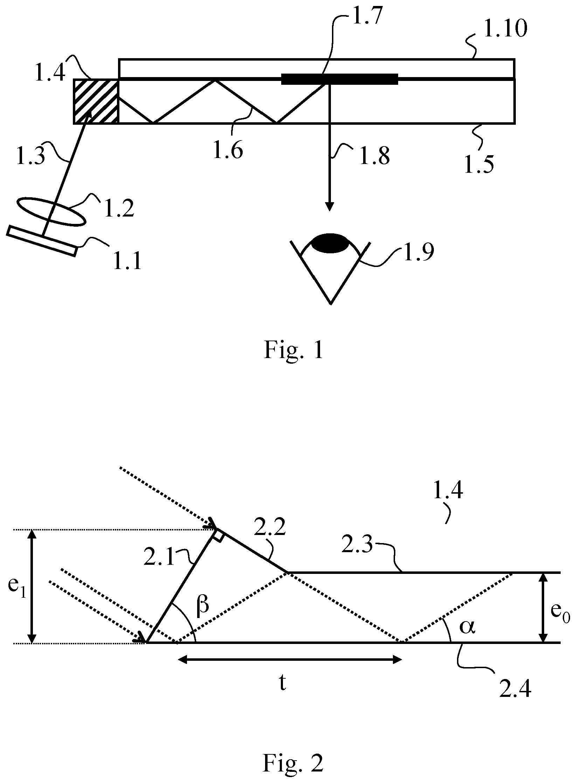

La Fig. 1 illustre schématiquement un tel dispositif de guidage optique.

Le dispositif de guidage comporte deux parties principales : une première partie 1.5 et une seconde partie 1.10.

La première partie 1.5 permet de propager, par réflexions successives, un faisceau lumineux 1.6 transportant une image sur une distance prédéfinie. La première partie 1.5 comporte une section d'extraction permettant de faire sortir le faisceau lumineux du dispositif de guidage optique une fois qu'il a atteint cette distance préfinie.

La seconde partie 1.10 est constituée dans un matériau substantiellement identique à celui de ladite première partie. Elle se superpose à la première partie 1.5, d'une manière détaillée par la suite, et permet d'obtenir l'effet de vision à travers, sans phénomène d'interférence de type diffraction d'une fente.

Une source de lumière 1.1 génère le faisceau lumineux transportant l'image destinée à transiter par le guide optique. Cette source peut consister en une matrice de pixels LCD disposant d'un éclairage arrière ou encore d'une matrice de pixels OLED. Toute source d'image lumineuse peut être utilisée ici.

Le faisceau lumineux est ensuite collimaté par un système optique 1.2. Les différents pixels de l'image sont donc projetés par un faisceau de rayons lumineux parallèles 1.3 en sortie du système optique 1.2, et le champ de vision est défini par la focale de l'objectif et par la demi-diagonale de l'image à transporter. Le faisceau lumineux collimaté 1.3 est ensuite projeté dans une section d'injection 1.4. Cette section d'injection est détaillée ci-après en relation avec la Fig. 2.

Le faisceau lumineux est alors transporté dans la première partie 1.5 jusqu'à ce qu'il parvienne à la section d'extraction, à partir de laquelle le faisceau lumineux est projeté hors du dispositif de guidage optique.

La première partie 1.5 est constituée dans un matériau transparent à la lumière. Si l'indice du matériau est supérieur à ceux des milieux qui l'entourent, des réflexions internes totales se produisent naturellement dès lors que l'angle d'incidence des rayons du faisceau est suffisamment faible par rapport à la surface sur laquelle frappe le faisceau lumineux.

La section d'extraction est située sur l'une des faces de la première partie 1.5. Elle permet de renvoyer le faisceau lumineux vers l'autre face de la première partie 1.5 selon un angle sensiblement perpendiculaire, ce qui permet la sortie du faisceau lumineux du dispositif de guidage. Le faisceau lumineux 1.8 est ainsi projeté hors du dispositif de guidage vers un capteur 1.9, qui peut être l'oeil d'un utilisateur dans le cas d'un système optique de vision oculaire.

La section d'extraction est située dans une zone 1.7 du dispositif de guidage, dans laquelle la première partie 1.5 comprend au moins une microstructure, située en surface et comportant une surface plane adaptée pour permettre la sortie du dispositif de guidage de rayons du faisceau lumineux venant frapper ladite surface plane. Dans cette zone 1.7, la seconde partie 1.10 comprend au moins une microstructure de forme complémentaire à celle(s) de la première partie 1.5. Les microstructures qui sont complémentaires l'une de l'autre sont ainsi placées en vis-à-vis.

Les première 1.5 et seconde 1.10 parties sont assemblées de telle sorte que toute microstructure de la section d'extraction est séparée de sa microstructure complémentaire par un milieu transparent d'épaisseur substantiellement constante. L'épaisseur est choisie de manière à entraîner une modification limitée de la vision de la scène extérieure. Les microstructures et leurs complémentaires étant substantiellement parallèles du fait de l'épaisseur substantiellement constante du milieu transparent, la vision de la scène extérieure n'est pas modifiée substantiellement, les rayons ne subissant qu'une petite translation.

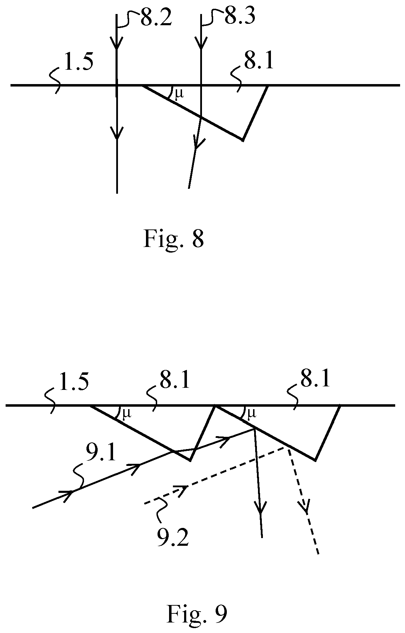

De manière à tenter de répondre au problème posé, il a été noté qu'une solution aurait pu consister à remplir les creux des microstructures de la section d'extraction, que ces microstructures soient des prismes en forme de saillie ou en creux, par un matériau de remplissage 8.1, comme illustré schématiquement sur la Fig. 8. Cependant, si ce matériau de remplissage 8.1 est différent de celui de la première partie 1.5, cela crée une réfraction relativement importante des rayons en vision à travers. Cette réfraction doit être considérée par rapport à la taille d'un pixel. La taille typique d'un pixel vidéo est de l'ordre de 0.03°. Si les deux matériaux sont différents, ils auront deux indices différents $n_1$ pour le matériau de remplissage et $n_2$ pour le matériau de la première partie 1.5. On peut évaluer la déviation d'un rayon arrivant perpendiculairement à la surface de la première partie 1.5, la microstructure étant un prisme d'angle $\mu$. Cette situation est montrée sur la Fig. 8, dans laquelle un rayon 8.2 arrive de la scène extérieure perpendiculairement à la surface de la première partie 1.5 sans traverser le matériau de remplissage 8.1, et dans laquelle un rayon 8.3 parallèle au rayon 8.1 traverse le matériau de remplissage 8.1. On pose $\Delta N = (n_2 - n_1)/n_1$. Il vient que l'angle réfracté $\mu'$ est tel que :

$$\mu' = \mathrm{asin}\left(\frac{n_1}{n_2}\sin\mu\right) = \mathrm{asin}\left(\frac{1}{1+\Delta N}\sin\mu\right) \simeq \mu - \Delta N \frac{\sin\mu}{\cos\mu}$$

et la déviation:

**4**

$$\Delta\mu = \mu' - \mu = -\Delta N \tan\mu$$

Si on prend $\mu$=25.5° et les indices $n_1$ et $n_2$ environ égaux à 1.5, la déviation de 0.03° est atteinte pour une différence d'indice de 8e-4.

De plus, les rayons issus du faisceau lumineux 1.6 qui continuent leur propagation à travers les microstructures de la section d'extraction peuvent engendrer des images parasites. Ils subissent une réfraction à chaque fois qu'ils traversent l'interface entre les deux matériaux. Or il existe presque toujours un nombre important de rayons qui peuvent entrer dans le matériau de remplissage puis rentrer dans le matériau de la première partie 1.5, subissant deux réfractions qui ne se compensent pas, diminuant sensiblement la qualité d'image. Une telle situation est présentée en Fig. 9 où sont représentées deux microstructures en forme de prisme en creux remplis du matériau de remplissage 8.1. Il y est montré le décalage existant entre un rayon 9.1 subissant les deux réfractions qui ne se compensent pas et la divergence que cela entraîne par rapport à un rayon théorique 9.2.

Et, si ce matériau donné est substantiellement identique à celui de la première partie 1.5, un problème de fabrication se pose. En effet, effectuer un moulage avec ce matériau donné sur la première partie 1.5 pourrait entraîner une fusion de la surface de la première partie 1.5, ce qui détériorerait ses propriétés de réflexion des rayons lumineux. Les agencements selon la présente invention pallient ces inconvénients.

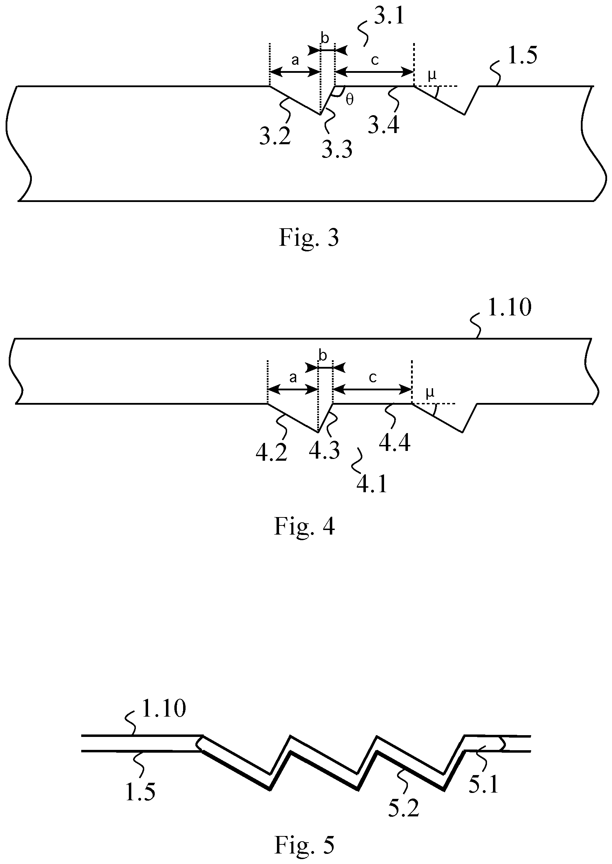

Des modes de réalisation des première 1.5 et seconde 1.10 parties sont respectivement décrits ci-après en relation avec les Figs. 3 et 4.

La Fig. 2 illustre schématiquement la section d'injection 1.4. D'autres modes de réalisation de la section d'injection 1.4 sont possibles sans sortir du cadre de l'invention dans la mesure où le faisceau lumineux entre dans le guide sans subir de dégradation susceptible de dégrader l'image.

La section d'injection 1.4 est composée d'une face plane d'entrée 2.1 faisant un angle $\beta$, différent de 90°, avec le plan des surfaces parallèles de la première partie 1.5. Le faisceau lumineux collimaté 1.3 entre perpendiculairement à la face d'entrée 2.1. Une facette 2.2 relie la face d'entrée 2.1 et une première face 2.3 de la première partie 1.5. La facette 2.2 est perpendiculaire à la face d'entrée 2.1. La facette 2.2 est préférentiellement absorbante pour éviter les images parasites. Le faisceau lumineux collimaté 1.3 traverse la face d'entrée 2.1 et vient frapper la seconde face 2.4 de la première partie 1.5. L'angle $\beta$ est calculé de façon à ce que l'angle d'incidence $\alpha$ des rayons du faisceau lumineux collimaté 1.3 avec la seconde face 2.4 de la première partie 1.5 permette une réflexion totale des rayons. Un rayon ainsi injecté dans la première partie 1.5 se retrouve piégé et se propage le long de la première partie 1.5 par réflexions sur ses faces. Les faces de la première partie 1.5 étant parallèles, le rayon conserve l'angle d'incidence $\alpha$ lors de chaque rebond contre les faces de la première partie 1.5.

Le faisceau lumineux 1.6 se propage par réflexions internes sur les faces de la première partie 1.5, ce qui forme des taches successives sur les faces de la première partie 1.5. Ces taches peuvent soit se chevaucher, soit être juste accolées, soit il peut y avoir des intervalles sans lumière entre elles. Il est difficile de s'assurer que la section d'extraction ne tombe pas à cheval sur deux taches, si on veut conserver des dimensions raisonnables, ainsi qu'un champ d'une taille intéressante. S'il y a des trous entre les taches, l'image vue par l'observateur n'est pas uniforme, et il se peut même que des portions de l'image transportée disparaissent par absence de lumière entrant dans la pupille de l'oeil de l'observateur. Les configurations où il y a de tels trous sont donc à éviter.

Si on appelle $e_0$ l'épaisseur de la première partie 1.5 là où le faisceau lumineux 1.6 se propage, la distance $s$ entre deux rebonds d'un rayon est :

$$s = e_0.tan(\beta).$$

Le faisceau lumineux collimaté 1.3 entrant s'étale sur une distance $t$ telle que :

$$t = 2\,e_0\,/\,sin(2\beta).$$

Pour qu'il n'y ait pas ces trous de lumière, il faut que $2s < t$. Cette condition est vérifiée pour $\beta > 45°$. Pour favoriser les réflexions totales internes, il est souhaitable que la condition $\beta > 45°$ soit vérifiée.

Pour minimiser ces trous de lumière, la largeur de la face d'entrée 2.1 de la section d'injection 1.4 peut être augmentée. Si on appelle $e_1$ la distance entre le sommet de la face d'entrée 2.1 et la face opposée de la première partie 1.5, pour un rayon d'incidence normale à la face d'entrée 2.1, la condition suivante doit être respectée pour ne plus avoir de trous de lumière :

$$e_0.tan(\beta) = e_1/sin(\beta) \; ; \; \text{soit} : e_1 = 2e_0 sin^2(\beta).$$

On note ainsi que la présence ou l'absence de ces trous de lumière est notamment liée aux valeurs de $e_0$ et de $\beta$. Modifier l'un de ces paramètres nécessite la modification de l'autre de manière à éviter ces trous de lumière.

La Fig. 3 illustre schématiquement une portion de la première partie 1.5 du dispositif de guidage optique de la Fig. 1. La Fig. 3 s'attache plus particulièrement à illustrer les microstructures 3.1 de la section d'extraction.

Les microstructures 3.1 sont disposées, ou pratiquées, en surface de la première partie 1.5, les rayons réfléchis par ces microstructures sortant par la face opposée. Les microstructures 3.1 sont, par exemple, des prismes à face plane dont l'angle actif est constant le long de chaque microstructure. La taille et la disposition de ces microstructures 3.1 dépendent de l'application utilisant le dispositif de guidage optique. Dans le cas d'un système optique de vision oculaire, la taille des microstructures 3.1 sera préférentiellement petite par rapport à la taille de la pupille de l'oeil, par exemple de l'ordre de quelques dizaines de $\mu$m. De cette façon, l'image projetée ne varie pas en fonction de la position et des mouvements de l'oeil. Du fait de leur taille et de leur faible distance de l'oeil, les microstructures 3.1 sont invisibles à l'oeil nu.

D'autre part, comme on le verra par la suite, les microstructures 3.1 étant recouvertes d'un matériau partiellement réfléchissant, le dispositif de guidage optique reste suffisamment transparent pour permettre une vision à travers.

La Fig. 3 représente des microstructures 3.1, chacune étant composée d'un prisme en forme de creux en surface de la première partie 1.5. Dans une variante de réalisation, chaque microstructure est composée d'un prisme formant saillie en surface de la première partie 1.5. Un prisme est dit en saillie lorsque le point du prisme le plus éloigné du plan défini par la face sur laquelle ils sont construits est tel que l'épaisseur est à cet endroit supérieure à l'épaisseur de la première partie 1.5 où il n'y a pas de prismes. Dans le cas où cette épaisseur est inférieure, le prisme est dit en creux.

La largeur de chaque microstructure doit être supérieure à la longueur d'onde de la lumière visible et donc au moins de 10 $\mu$m. Pour l'application déjà mentionnée de système optique de vision oculaire, sa largeur doit rester petite par rapport à l'épaisseur de la première partie 1.5 et par rapport à la taille de la pupille de l'oeil de l'utilisateur. Par exemple une largeur de l'ordre de 200 $\mu$m, voire jusqu'à 750 $\mu$m peut être mise en oeuvre. Le lecteur comprend que, dans des applications différentes, d'autres tailles de microstructures 3.1 peuvent être envisagées sans sortir du cadre de l'invention.

Une seule microstructure ayant une longueur au moins égale à 10 $\mu$m permet de sortir une image du dispositif de guidage optique. Pour augmenter la qualité de l'image projetée, et de manière à offrir un large champ de vision, un ensemble de plusieurs microstructures 3.1 peut être mis en oeuvre.

Dans l'exemple de réalisation de l'invention selon les Figs. 1 à 4, la première partie 1.5 comporte deux faces planes parallèles, ce qui signifie que tous les rayons arrivent sensiblement avec le même angle d'incidence sur les microstructures 3.1. Les microstructures 3.1 sont alors dotées de surfaces planes, pour projeter l'image hors du dispositif de guidage optique, ayant toutes le même angle. Dans des variantes de réalisation, par exemple si la première partie 1.5 est courbe, les angles des surfaces planes des microstructures 3.1 peuvent varier d'une microstructure à une autre.

Les prismes en creux représentés sur la Fig. 3 sont formés d'une première face 3.2, sur laquelle des rayons du faisceau lumineux 1.6 sont déviés pour être projetés hors du dispositif de guidage optique, et une seconde face de raccord 3.3, qui permet de revenir à une épaisseur égale à celle de la première partie 1.5 là où il n'y a pas de prismes.

L'angle aigu formé par première face 3.2 d'un prisme et la parallèle aux faces de la première partie 1.5 est noté $\mu$. La projection, sur la surface de la première partie 1.5, de la première face 3.2 du prisme a une longueur notée $a$, et celle de la seconde face 3.3 du prisme a une longueur $b$. La distance entre deux microstructures est notée $c$. Dans un mode de réalisation particulier, la distance $c$ est nulle.

De plus amples détails sur la forme des microstructures 3.1 sont fournis dans le brevet FR 2 925 172 B1 et sont applicables dans le présent contexte.

La Fig. 4 illustre schématiquement une portion de la seconde partie 1.10 du dispositif de guidage optique de la Fig. 1. La Fig. 4 s'attache plus particulièrement à illustrer les microstructures 4.1 complémentaires aux microstructures 3.1 de la section d'extraction.

Les microstructures 4.1 sont présentes dans une section de la seconde partie 1.10 destinée à être placée en correspondance de la section d'extraction de la première partie 1.5. Cette section de la seconde partie 1.10 est appelée section complémentaire.

Les microstructures 4.1 sont disposées en surface de la seconde partie 1.10. Les microstructures 4.1 sont de forme complémentaire aux microstructures de la section d'extraction de la première partie 1.5. A chaque microstructure 3.1 correspond une microstructure 4.1.

La Fig. 4 représente des microstructures 4.1, chacune étant composée d'un prisme en saillie en surface de la seconde partie 1.10. Elles sont les complémentaires des microstructures 3.1 représentées à la Fig. 3. Dans le cas où les microstructures 3.1 sont des prismes en saillie en surface de la première partie 1.5, les microstructures 4.1 sont alors des prismes, de mêmes dimensions, formés en creux en surface de la seconde partie 1.10.

Les microstructures 4.1 sont donc de forme complémentaire aux microstructures 3.1. Les prismes en saillie représentés sur la Fig. 4 sont formés d'une première face 4.2, formant un angle aigu égal à $\mu$ avec la parallèle aux faces de la seconde partie 1.10, et une seconde face de raccord 4.3, qui permet de revenir à une épaisseur égale à celle de la seconde partie 1.10 là où il n'y a pas de prismes.

Il convient de noter que dans la représentation de la Fig. 4, les faces de la seconde partie 1.10 du dispositif de guidage optique sont parallèles aux faces de la première partie 1.5 du dispositif de guidage optique, tel que représentée sur la Fig. 3.

La Fig. 5 illustre schématiquement un premier mode de réalisation particulier d'un assemblage des première 1.5 et seconde 1.10 parties du dispositif de guidage optique de la Fig. 1.

Ce premier mode de réalisation permet un assemblage des première 1.5 et seconde 1.10 parties de telle sorte que toute microstructure de la section d'extraction de la première partie 1.5 est séparée de sa microstructure complémentaire de la seconde partie 1.10 par un milieu transparent d'épaisseur substantiellement constante.

Comme on peut le voir sur la Fig. 5, les première 1.5 et seconde 1.10 parties sont assemblées de telle sorte que leurs microstructures soient placées en vis-à-vis de façon complémentaire, c'est-à-dire, en référence aux Figs. 3 et 4, de telle sorte que les prismes en saillie de la seconde partie 1.10 s'inscrivent partiellement dans les prismes en creux de la première partie 1.5. Les prismes en saillie de la seconde partie 1.10 ne s'inscrivent que partiellement dans les prismes en creux de la première partie 1.5 du fait de la présence du milieu transparent entre les microstructures et leurs complémentaires.

Dans le premier mode de réalisation de la Fig. 5, les première 1.5 et seconde 1.10 parties sont assemblées au moyen d'une couche de colle 5.1 entre la section d'extraction et la section complémentaire. La couche de colle 5.1 constitue alors le milieu transparent entre chaque microstructure de la section d'extraction et sa microstructure complémentaire.

Dans le mode de réalisation de la Fig. 5, sur la surface externe des microstructures de la première partie 1.5, une couche 5.2 de matériau partiellement réfléchissant est déposée. De cette manière, on dispose d'une couche 5.2 en matériau partiellement réfléchissant qui s'étend entre chaque microstructure de la section d'extraction et sa microstructure complémentaire. Cette couche 5.2 de matériau partiellement réfléchissant permet à la section d'extraction de faire sortir le faisceau lumineux 1.6 du dispositif de guidage par réflexion de rayons, et permet en outre, par transparence, la mise en oeuvre de l'effet de vision à travers. La couche 5.2 de matériau partiellement transparent est préférentiellement équi-répartie sur la section d'extraction, de manière à obtenir un effet homogène de vision à travers. On peut par exemple utiliser une épaisseur de matériau qui fournit une réflectivité de l'ordre de 1/4.

De manière à faciliter la dépose de cette couche de matériau partiellement réfléchissant, les microstructures 3.1 ont une forme telle que la face de raccord 3.3 forme un angle $\theta$ obtus, tel que représenté sur la Fig. 3, avec la parallèle aux faces de la première partie 1.5.

De manière à limiter l'effet de réfraction lié à l'introduction de la couche de colle 5.1, son épaisseur doit être limitée. Par exemple, une épaisseur de colle de 100 $\mu$m crée un parasite d'intensité relative de 1%, et une épaisseur de colle de 25 $\mu$m crée un parasite d'intensité relative de 0,5%. Le dimensionnement du parasite d'intensité relative dépend de l'application dans laquelle s'inscrit le dispositif de guidage optique.

Il convient de noter que, comme la couche de colle 5.1 est disposée entre les microstructures des première 1.5 et seconde 1.10 parties, celle-ci s'étend sur une partie de la surface de la première partie 1.5 autre que celle adaptée pour propager le faisceau lumineux 1.6 par réflexions successives. Cela permet d'éviter que des trous de lumière ne soient créés par l'application de la couche de colle. En effet, si la colle s'étendait au-dessus de cette zone où les rayons se propagent par réflexions sur les faces de la première partie 1.5, l'épaisseur réelle du guide du faisceau lumineux 1.6 serait la somme de l'épaisseur de la première partie 1.5, de l'épaisseur de colle et de l'épaisseur de la seconde partie 1.10. L'indice de la colle étant similaire à celui du matériau des première 1.5 et seconde 1.10 parties, les rayons peuvent traverser cette épaisseur de colle et la réflexion totale a lieu sur la face externe de la seconde partie 1.10. Le dimensionnement de la première partie peut ainsi se faire, comme déjà expliqué en relation avec la Fig. 2, indépendamment du procédé d'assemblage. La conception s'en trouve simplifiée.

La couche de colle 5.1 peut aussi être disposée sur une autre partie de la première partie 1.5, en complément de la colle présente entre les microstructures et leurs complémentaires.

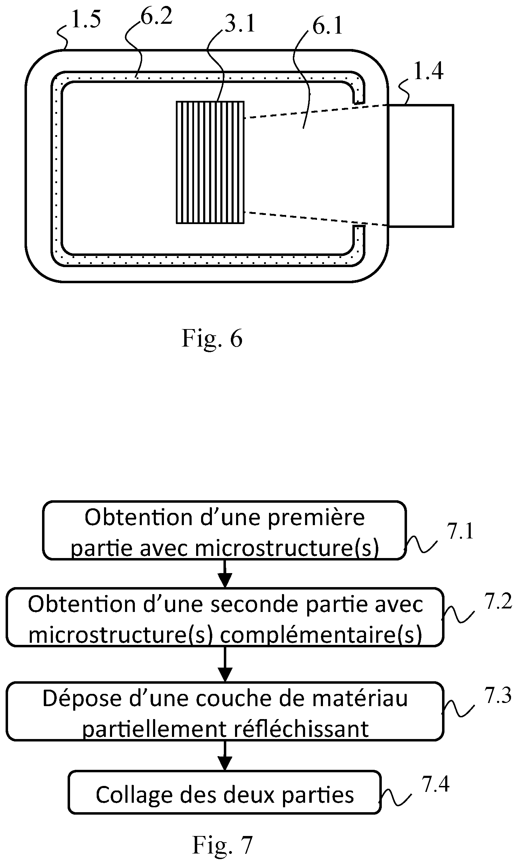

La Fig. 6 illustre schématiquement un second mode de réalisation particulier de l'assemblage des première 1.5 et seconde 1.10 parties du dispositif de guidage optique de la Fig. 1.

Ce second mode de réalisation permet un assemblage des première 1.5 et seconde 1.10 parties de telle sorte que toute microstructure de la section d'extraction de la première partie 1.5 est séparée de sa microstructure complémentaire de la seconde partie 1.10 par un milieu transparent d'épaisseur substantiellement constante.

Dans ce second mode de réalisation, le milieu transparent séparant chaque microstructure de sa complémentaire est dans ce cas un gaz, par exemple de l'air.

Comme pour le premier mode de réalisation de la Fig. 5, les première 1.5 et seconde 1.10 parties sont assemblées de telle sorte que leurs microstructures soient placées en vis-à-vis de façon complémentaire, c'est-à-dire, en référence aux Figs. 3 et 4, de telle sorte que les prismes en saillie de la seconde partie 1.10 s'inscrivent partiellement dans les prismes en creux de la première partie 1.5.

Comme pour le premier mode de réalisation de la Fig. 5, une couche de colle 6.2 permet d'assembler les première 1.5 et seconde parties 1.10 du dispositif de guidage. La couche de colle 6.2 s'étend ici sur une surface de ladite première partie autre que celle comportant la section d'extraction. La couche de colle 6.2 peut s'étendre de manière à partiellement entourer la section d'extraction.

Les contraintes sur l'épaisseur de la couche de colle 6.2 sont sensiblement du même ordre de grandeur que ce qui a été exprimé pour le premier mode de réalisation de la Fig. 5.

Il convient de noter que, sur le schéma de la Fig. 6, la couche de colle s'étend sur une partie de la surface de la première partie 1.5 autre que la partie 6.1 adaptée pour propager le faisceau lumineux 1.6 par réflexions successives, celle-ci étant délimitée par des traits pointillés sur la Fig. 6.

Dans un mode de réalisation particulier, la colle utilisée est une colle à microbilles. Les microbilles permettent alors une plus grande maîtrise de l'interstice entre les première 1.5 et seconde 1.10 parties du dispositif de guidage. Le procédé d'assemblage s'en trouve simplifié.

De la même manière que dans le mode de réalisation de la Fig. 5, une couche 5.2 de matériau partiellement réfléchissant peut être déposée sur la surface externe des microstructures de la première partie 1.5.

La Fig. 7 illustre schématiquement les étapes d'un procédé de fabrication du dispositif de guidage optique de la Fig. 1.

Dans une étape 7.1, on obtient la première partie 1.5 comportant au moins une microstructure, située en surface d'une des deux faces de ladite première partie et comportant une surface plane adaptée pour permettre la sortie du dispositif de guidage de rayons du faisceau lumineux venant frapper cette surface plane.

Dans une étape 7.2, on obtient la seconde partie 1.10 comportant en surface au moins une microstructure de forme complémentaire à celle(s) de la première partie 1.5.

Il est à noter que, comme les microstructures des première 1.5 et seconde 1.10 parties du dispositif de guidage optique sont complémentaires l'une de l'autre, les étapes 7.1 et 7.2 peuvent être inversées. Elles peuvent être aussi réalisées en parallèle.

Les étapes 7.1 et 7.2 sont préférentiellement réalisées par moulage.

Dans une étape 7.3, on dépose une couche de matériau partiellement réfléchissant sur la ou les microstructures de la première partie 1.5. De manière préférentielle, la couche de matériau est déposée de manière équi-répartie sur la ou les microstructures de la première partie 1.5. Ainsi, la couche de matériau partiellement réfléchissant est déposée, en se référant à la Fig. 3, à la fois sur les faces 3.2 et 3.3 de chaque microstructure.

Dans une étape suivante 7.4, on colle les première et seconde parties entre elles, de telle sorte que toute microstructure de la section d'extraction est séparée de sa microstructure complémentaire par un milieu transparent d'épaisseur substantiellement constante. Cette opération de collage peut être effectuée de manière à obtenir un assemblage tel que précédemment décrit en relation avec les Figs. 5 et 6.

La couche de colle peut être déposée, en vue de l'assemblage, indifféremment sur la première partie 1.5 ou sur la seconde partie 1.10 du dispositif de guidage.

**Revendications**

1. Dispositif de guidage optique d'un faisceau lumineux transportant une image, ledit dispositif de guidage optique comprenant :

   - une première partie (1.5), dans un matériau transparent, comprenant une section d'extraction comportant au moins une microstructure (3.1), située en surface de ladite première partie ;
   - une seconde partie (1.10), dans un matériau substantiellement identique à celui de ladite première partie, comprenant une section, dite section complémentaire, comportant en surface au moins une microstructure (4.1) de forme complémentaire à celle(s) de ladite section d'extraction ;

   ladite première partie étant adaptée pour propager le faisceau lumineux (1.6) par réflexions internes totales successives et chaque microstructure comportant une surface plane (3.2) adaptée pour permettre la sortie du dispositif de guidage de rayons du faisceau lumineux propagé par réflexions successives dans ladite première partie et venant frapper ladite surface plane, et ledit dispositif de guidage optique comprenant en outre :

   - une couche de colle (5.1;6.2) s'étendant sur une partie des surfaces desdites première et seconde parties les assemblant de telle sorte que toute microstructure de ladite section d'extraction est séparée de sa microstructure complémentaire par un milieu transparent d'épaisseur substantiellement constante, **caractérisé en ce qu'**une couche (5.2) en matériau partiellement réfléchissant s'étend sur chaque microstructure de ladite section d'extraction de manière équi-répartie sur la section d'extraction.

2. Dispositif de guidage optique selon la revendication 1, **caractérisé en ce que**, ladite couche de colle (5.1;6.2) s'étend sur une partie de la surface de ladite première partie autre que celle (6.1) adaptée pour propager le faisceau lumineux par réflexions successives.

3. Dispositif de guidage optique selon la revendication 2, **caractérisé en ce que** la couche de colle (6.2) s'étend sur une surface de ladite première partie autre que celle comportant la section d'extraction.

4. Dispositif de guidage optique selon la revendication 3, **caractérisé en ce que** ladite colle est à microbilles.

5. Dispositif de guidage optique selon l'une quelconque des revendications 2 et 3, **caractérisé en ce que** la couche de colle (5.1) constitue ledit milieu transparent entre chaque microstructure de ladite section d'extraction et sa microstructure complémentaire.

6. Dispositif de guidage optique selon l'une des revendications 1 à 5, **caractérisé en ce que** chaque microstructure de ladite section d'extraction est composée d'un prisme formant saillie en surface de ladite première partie.

7. Dispositif de guidage optique selon l'une des revendications 1 à 5, **caractérisé en ce que** chaque microstructure de ladite section d'extraction est composée d'un prisme en forme de creux en surface de ladite première partie.

8. Système optique de vision oculaire, **caractérisé en ce qu'**il comprend un dispositif de guidage optique selon l'une quelconque des revendications 1 à 7.

**Patentansprüche**

1. Vorrichtung zur optischen Wellenleitung eines Lichtstrahls, der ein Bild transportiert, wobei die optische Wellenleitervorrichtung umfasst:

   - einen ersten Teil (1.5), aus einem transparenten Material, umfassend einen Extraktionsabschnitt, umfassend mindestens eine Mikrostruktur (3.1), die an der Fläche des ersten Teils angeordnet ist;
   - einen zweiten Teil (1.10), aus einem Material im Wesentlichen identisch mit jenem des ersten Teils, umfassend einen Abschnitt, der als komplementärer Abschnitt bezeichnet wird, umfassend an der Fläche mindestens eine Mikrostruktur (4.1) mit einer Form komplementär zu jener (jenen) des Extraktionsabschnitts;

   wobei der erste Teil geeignet ist, den Lichtstrahl (1.6) durch aufeinanderfolgende interne Totalreflexionen auszubreiten, und jede Mikrostruktur eine ebene Fläche (3.2) umfasst, die geeignet ist, die Ausgabe, aus der Wellenleitervorrichtung, von Strahlen des Lichtstrahls, der von aufeinanderfolgenden Reflexionen in dem ersten Teil ausgebreitet wird und auf die ebene Fläche auftrifft, zu gestatten, und die optische Wellenleitervorrichtung außerdem umfasst:

   - eine Kleberschicht (5.1; 6.2), die sich über einen Teil der Flächen des ersten und zweiten Teils erstreckt, indem sie diese zusammenfügt, so dass jede Mikrostruktur des Extraktionsabschnitts von ihrer komplementären Mikrostruktur durch ein transparentes Medium mit im Wesentlichen konstanter Dicke getrennt ist,

   **dadurch gekennzeichnet, dass** sich eine Schicht (5.2) aus einem teilweise reflektierenden Material über jede Mikrostruktur des Extraktionsabschnitts in gleichmäßig verteilter Weise auf dem Extraktionsabschnitt erstreckt.

2. Optische Wellenleitervorrichtung nach Anspruch 1, **dadurch gekennzeichnet, dass** sich die Kleberschicht (5.1; 6.2) über einen anderen Teil der Fläche des ersten Teils als jenen (6.1) erstreckt, der zur Ausbreitung des Lichtstrahls durch aufeinanderfolgende Reflexionen geeignet ist.

3. Optische Wellenleitervorrichtung nach Anspruch 2, **dadurch gekennzeichnet, dass** sich die Kleberschicht (6.2) über eine andere Fläche des ersten Teils als jene erstreckt, die den Extraktionsabschnitt umfasst.

4. Optische Wellenleitervorrichtung nach Anspruch 3,
**dadurch gekennzeichnet, dass** der Kleber aus Mikrokügelchen besteht.

5. Optische Wellenleitervorrichtung nach einem der Ansprüche 2 und 3,
**dadurch gekennzeichnet, dass** die Kleberschicht (5.1) das transparente Medium zwischen jeder Mikrostruktur des Extraktionsabschnitts und seiner komplementären Mikrostruktur bildet.

6. Optische Wellenleitervorrichtung nach einem der Ansprüche 1 bis 5,
**dadurch gekennzeichnet, dass** jede Mikrostruktur des Extraktionsabschnitts aus einem Prisma besteht, das von der Fläche des ersten Teils vorsteht.

7. Optische Wellenleitervorrichtung nach einem der Ansprüche 1 bis 5,
**dadurch gekennzeichnet, dass** jede Mikrostruktur des Extraktionsabschnitts aus einem Prisma in hohler Form an der Fläche des ersten Teils besteht.

8. Optisches Sichtfeldsystem,
**dadurch gekennzeichnet, dass** dieses eine optische Wellenleitervorrichtung nach einem der Ansprüche 1 bis 7 umfasst.


## Claims

1. Optical guidance device for optical guidance of a light beam transporting an image, said optical guidance device comprising:

   - a first part (1.5), made from a transparent material, comprising an extraction section comprising at least one microstructure (3.1), situated on the surface of said first part;
   - a second part (1.10), made from a material substantially identical to that of said first part, comprising a section, referred to as complementary section, comprising on the surface at least one microstructure (4.1) with a form complementary to that or those of said extraction section;

   said first part being adapted to propagate the light beam (1.6) by successive total internal reflections and each microstructure comprising a flat surface (3.2) adapted to enable the rays of the light beam propagated by successive reflections in said first part and striking said flat surface to emerge from the guidance device;
   and said optical guidance device further comprising:

   - a layer of adhesive (5.1; 6.2) extending over a part of the surfaces of said first and second parts assembling them so that every microstructure of said extraction section is separated from its complementary microstructure by a transparent medium of substantially constant thickness,

   **characterized in that** a layer (5.2) of partially reflective material extending over each microstructure of said extraction section in a uniformly distributed manner on the extraction section.

2. Optical guidance device according to claim 1, **characterised in that** said layer of adhesive (5.1; 6.1) extends over a part of the surface of said first part other than the one (6.1) adapted to propagate the light beam by successive reflections.

3. Optical guidance device according to claim 2, **characterised in that** the layer of adhesive (6.2) extends over a surface of said first part other that the one comprising the extraction section.

4. Optical guidance device according to claim 3, **characterised in that** said adhesive is of the microball type.

5. Optical guidance device according to any one of claims 2 and 3, **characterised in that** the layer of adhesive (5.1) constitutes said transparent medium between each microstructure of said extraction section and its complementary micro structure.

**6.** Optical guidance device according to one of claims 1 to 5, **characterised in that** each microstructure of said extraction section is composed of a prism forming a projection on the surface of said first part.

**7.** Optical guidance device according to one of claims 1 to 5, **characterised in that** each microstructure of said extraction section is composed of a prism in the form of hollows on the surface of said first part.

**8.** Ocular-vision optical system, **characterised in that** it comprises an optical guidance device according to any one of claims 1 to 7.

1.7

1.10

1.4

1.6

1.8

1.5

1.3

1.2

1.1

1.9

Fig. 1

1.4

2.2

2.1

2.3

$e_1$

$\beta$

$e_0$

$\alpha$

t

2.4

Fig. 2

Fig. 3

Fig. 4

Fig. 5

1.5  6.2  3.1  6.1  1.4

Fig. 6

| Obtention d'une première partie avec microstructure(s) | 7.1 |

↓

| Obtention d'une seconde partie avec microstructure(s) complémentaire(s) | 7.2 |

↓

| Dépose d'une couche de matériau partiellement réfléchissant | 7.3 |

↓

| Collage des deux parties | 7.4 |

Fig. 7

Fig. 8

Fig. 9

**EP 2 695 017 B1**

## RÉFÉRENCES CITÉES DANS LA DESCRIPTION

**Documents brevets cités dans la description**

- FR 2925172 B1

- US 2003165017 A1